# EUROPEAN PATENT APPLICATION

(11) **EP 2 028 611 A1**
(43) Date of publication of application: **25.02.2009**
(21) Application number: 07114639.3
(22) Date of filing: 20.08.2007
(51) Int. Cl.: G06Q 10/00, H04L 29/00

(54) **System and method for representation of electronic mail users using avatars**

(71) Applicant: Research In Motion Limited, Waterloo, Ontario N2L 3W8 (CA)
(72) Inventor: Vuong, Thanh Vinh, Kitchener, Ontario N2E 4B9 (CA); Nagy, Tom, Waterloo Ontario N2L 2N4 (CA); Scott, Sherryl Lee Lorraine, Toronto Ontario M5T 1Y4 (CA)
(74) Representative: Rickard, David John

(57) **Abstract**

There is disclosed a system and method for graphically representing an email user. In an embodiment, the method may comprise: at a sending communication device, sending an accompanying avatar or avatar identifier with an email message; at a receiving communication device, scanning an email message for an accompanying avatar or avatar identifier, and if an accompanying avatar is found, displaying the avatar with the email message in a message list user interface; if an accompanying avatar identifier is found, searching for an avatar locally stored at the receiving communication device, and displaying the locally stored avatar if found. The method further comprises sending and receiving a mood avatar or mood avatar identifier indicative of the mood of the user. The mood avatar may be selected at the sending communication device using a mood analyzer, or receiving a mood input from a user.

## Description

The present disclosure relates generally to systems and methods for representing electronic mail (email) users using avatars, and for optionally providing additional information about the user.

Avatars are graphic representations of users which may be found in certain applications, such as games or online chat or bulletin board applications. An avatar usually represents an individual user, and may be virtually any type of graphic icon or representation that a user may select. However, the known use of avatars in current applications is relatively limited.

### BRIEF DESCRIPTION OF THE DRAWINGS

In the figures which illustrate exemplary embodiments:

FIG. 1 is a schematic block diagram of various components that may be found in a handheld mobile communication device.

FIG. 2 is an illustrative example of a handheld mobile communication device that may provide an operating environment.

FIG. 3A is a schematic block diagram of an illustrative system for representing an email user using an avatar in accordance with an embodiment.

FIG. 3B is a schematic block diagram of an illustrative system for selecting a mood avatar for an individual email user in accordance with an embodiment.

FIGS. 4A to 4D show illustrative examples of individual and group email user avatars in accordance with various embodiments.

FIGS. 5A and 5B show user interfaces for editing and selecting individual mood avatars in accordance with various embodiments.

FIGS. 6A and 6B show schematic flowcharts of a method in accordance with various embodiments.

### GENERAL

As noted above, the present disclosure relates generally to systems and methods for representing email users using avatars, and for providing additional information about the email user.

It may sometimes be difficult to identify the sender of an email message by simply viewing the name/address field in a message list or email inbox, particularly if the sender has a long name or email address that is cut-off in the name/address field. The same problem may exist whether the email is from an individual or from an organization or group. The identity of the message sender may be difficult to ascertain until the email message is actually opened. This may cause an email recipient to waste time in opening unwanted email messages (e.g. SPAM), or to miss opening an important email message from someone that they had been expecting.

What is needed is a system and method for more easily identifying email users, and for optionally providing additional information about the email user.

In an illustrative embodiment, the invention may be practiced with a handheld mobile communication device in a wireless operating environment.

### DESCRIPTION OF PREFERRED EMBODIMENTS

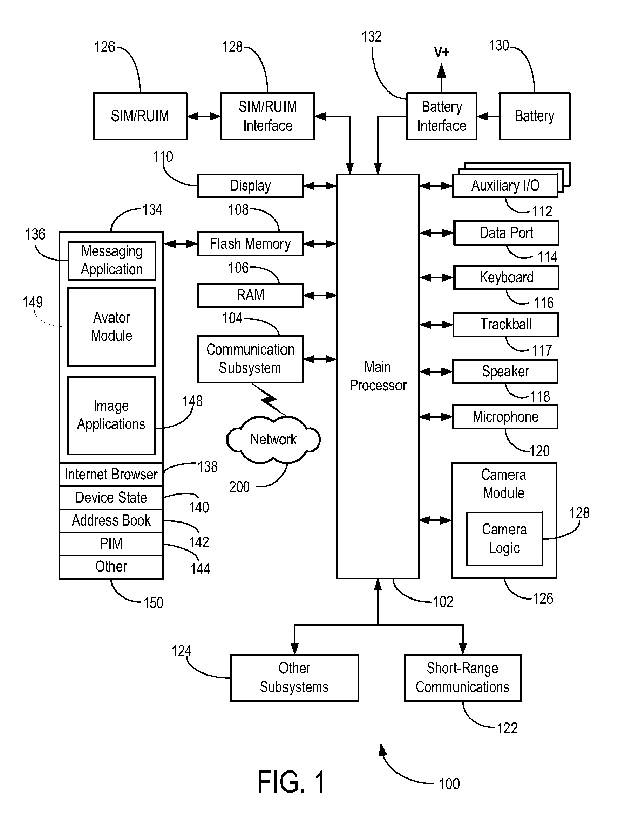

Shown in FIG. 1 is a schematic block diagram of an illustrative handheld mobile communication device 100. The communication device 100 may comprise a number of components, including a main processor 102 which controls the overall operation of communication device 100. Communication functions, including data and voice communications, may be performed through a communication subsystem 104. The communication subsystem 104 may receive messages from and send messages to a wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a trackball 117, a speaker 118, a microphone 120, short-range communications subsystem 122, a camera module 126, associated camera logic 128, and other subsystems 124. As one example, the main processor 102 may interact with a GPS (Global Positioning System) subsystem.

Some of the subsystems of the communication device 100 may perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list. The trackball 117 may be used for various navigation functions, such as navigating through a graphical user interface (GUI) menu displayed on display 110. The trackball 117 may also be configured with a secondary actuation feature, such as allowing a user to depress the trackball, to allow selection of a highlighted item. Other subsystems may be used for navigation, including without limitation a click wheel and a touch-sensitive interface such as, for example, a touch screen or touchpad.

In an embodiment, the keyboard 116 may be pressure sensitive to sense the amount of force being used by a user. As will be described in more detail further below, this may be one of the inputs used to guide selection of an avatar representation of a user's mood.

The camera module 126 may be adapted to capture an image through a lens onto a light sensitive image sensor such as a charge coupled device (CCD) sensor array or a complementary metal oxide semiconductor (CMOS) sensor array. The camera lens may be a fixed focus lens, or a variable focus lens with or without zoom features and controlled by camera logic 128 to focus an image onto the CCD or CMOS sensor array. The size and pixel density of the CCD or CMOS sensor array may be suitably selected for the image resolution required for a particular application. Camera logic 128 may also control the camera lens aperture and/or shutter speed by incorporating a suitable light exposure meter. Image capture using camera module 126 may be initiated by a user controlling a dedicated camera shutter, or a context dependent programmable button or key (on keyboard 116, for example) that may act as a camera shutter button.

Once captured by the CCD or CMOS sensor array, the image may then be processed by camera logic 128 into a suitable digital image file format such as Joint Photographic Experts Group (JPEG), Tagged-Image File Format (TIFF), Bit Mapping (BMP), different variations on these standard image file formats, or a vendor proprietary RAW image format.

As will be described in detail further below, images of a user's face in various moods may be captured using the camera module 1 26 and converted into a suitable thumbnail sized avatar for use in displaying the current mood of a user.

Still referring to FIG. 1, operating system software used by the main processor 102 is typically stored in a persistent store such as flash memory 108. Those skilled in the art will appreciate that the operating system, specific device applications, or parts thereof, may be temporarily loaded into a volatile store, such as the RAM 106, for processing by main processor 102.

The communication device 100 may send and receive communication signals over the wireless network 200 after required network registration or activation procedures have been completed. Network access may be associated with a subscriber or user of the communication device 100.

The communication device 100 may be a battery-powered device and may include a battery interface 132 for receiving one or more rechargeable batteries 130. In some embodiments, the battery 130 may be a smart battery with an embedded microprocessor. The battery interface 132 is coupled to a regulator (not shown), which assists the battery 130 in providing power V+ to the communication device 100. The battery 130 may be used to power all components and modules in the communication device 100, including the camera module 126 and associated camera logic 128.

The main processor 102, in addition to its operating system functions, enables execution of various software application 134 on the communication device 100. A subset of software applications 134 that control basic device operations, including data and voice communication applications, will normally be installed on the communication device 100 during its manufacture.

The software applications 134 may include a messaging application 136. The messaging application 136 can be any suitable software program that allows a subscriber or user of the communication device 100 to send and receive wireless text communications. Various alternatives exist for the messaging application 136 as is well known to those skilled in the art. Messages that have been sent or received by the user are typically stored in local storage such as flash memory 108 of the communication device 100, or in some other suitable storage element in the communication device 100. In an alternative embodiment, some of the sent and received messages may be stored remotely from the communication device 100 such as in a data store of an associated host system that the communication device 100 communicates with. In an embodiment, the messaging application 136 may include a Message List user interface that is configured to allow a user to see a list of message objects (i.e. email messages) in a convenient list form. This will be described in detail further below.

Still referring to FIG. 1, communication device 100 may include an Image Applications Module 148 that may be operatively integrated with camera module 126, camera logic 128, main processor 102, RAM 106, display 110 and various other modules and components to provide various image application functions for the images captured by the camera module 126. Image Applications Module may include various sub modules in order to perform various functions.

in an embodiment, communication device 100 may further include an Avatar Module 149 that may be configured to perform various avatar editing and selection functions, as will be described further below. In an embodiment, the Avatar Module 149 may be integrated with the camera module 126 in order to capture images of a user's face displaying various moods.

The communication device 100 may further include a device state module 140, an address book 142, a personal information manager (PIM) 144, and various other modules 150. Additional software applications may also be loaded onto the communication device 100 through one or more of the wireless network 200, the auxiliary I/O subsystem 112, the data port 114, the short-range communications subsystem 122, or other device subsystem 124.

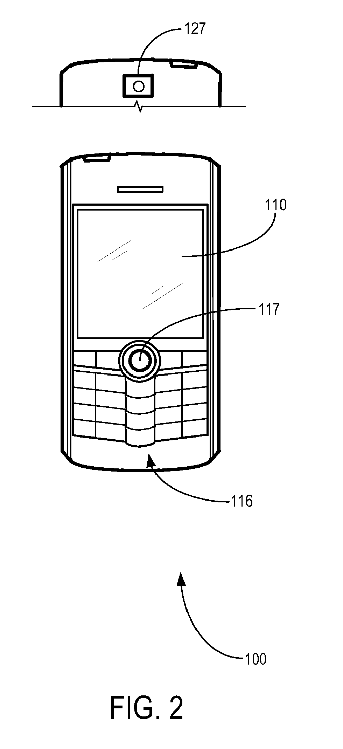

Now referring to FIG. 2, shown is an illustrative front view of a handheld mobile communication device 100 that may provide a suitable operating environment. As shown, the communication device 100 may include display 110, keyboard 116, and other input or navigation means such as trackball 117. The display 110 may be configured to display various screens allowing the user of device 100 to view screen outputs from the various software applications 134, including the image applications 148. Display 110 may also be configured to provide a touch-sensitive screen input in response to a prompt or query displayed on display 110. The communication device 100 may further include a camera lens that may be used to capture an image as described above with reference to FIG. 1. In an embodiment, the integrated camera 126 may provide a camera lens 127 on the back of the communication device 100, such that a user may use the display 110 as a camera viewfinder for framing an image.

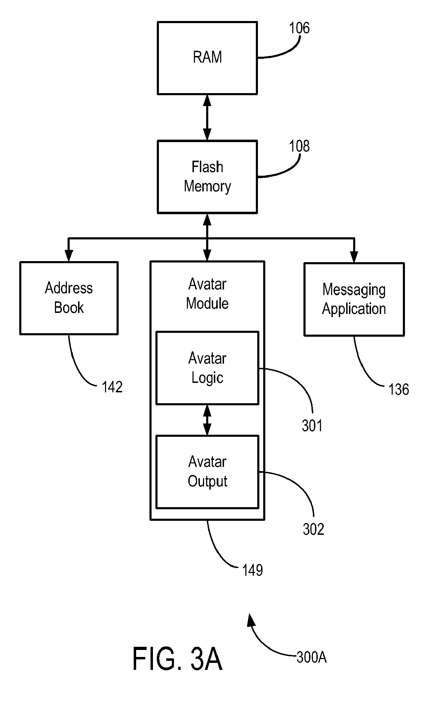

Now referring to FIG. 3A, shown is an illustrative system 300A for representing an email user using an avatar. As shown, system 300A includes an avatar module 149 that may be configured to include avatar logic 301 and an avatar output 302. The avatar logic may be adapted to execute suitable code for determining whether an avatar is available to represent an email user of a message received by messaging application 136.

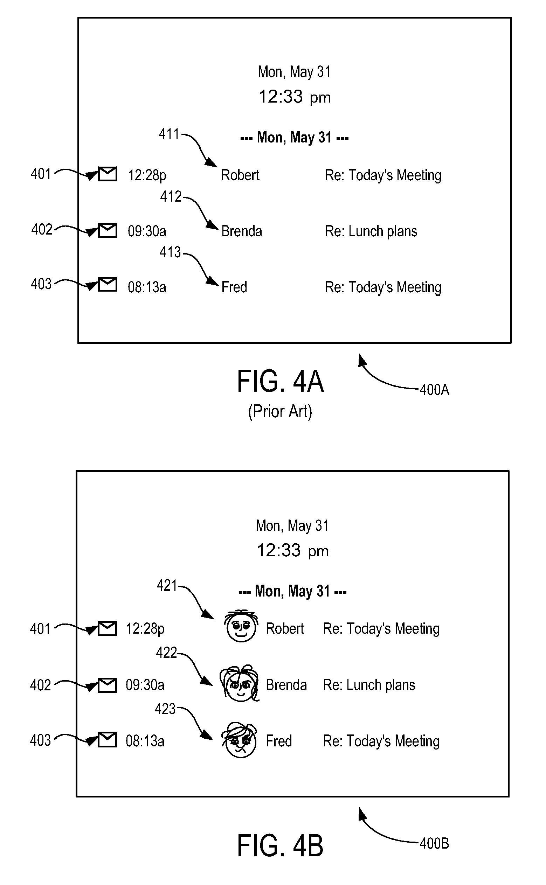

In an embodiment, an avatar that may correspond to an email user may be stored locally in the communication device 100 (e.g. in flash memory 108), such that avatar logic 301 can retrieve the avatar (i.e. the avatar graphic file) if available. Avatar output 302 may be operatively connected to messaging application 136 in order to display the avatar with the appropriate message in a message list user interface, as will be described in more detail further below with reference to FIGS. 4A to 4D. In an embodiment, the avatar may also be displayed within a list of contacts in an address book 142, such that the avatar may identify an email user in the address book 142. As will be described further below, if mood avatars are being used, the latest mood avatar or mood avatar indication received from an email user may be used to update the mood avatar being using in the address book 142.

In another embodiment, rather than being already stored in flash memory 108 or communication device 100, an avatar may be sent to communication device 100 from another compatible communication device. For example, another communication device with a compatible avatar module may be able to store an avatar, and communicate the avatar to another device along with an email message. Thus, avatars may be shared between devices, and may also be managed locally by individual users on each communication device 100. As will be explained in more detail further below, by using a graphic representation of an email user instead of an email address or name, it may be significantly easier for a user to review a list of email messages, and to quickly identify the emails that the user wishes to open and read.

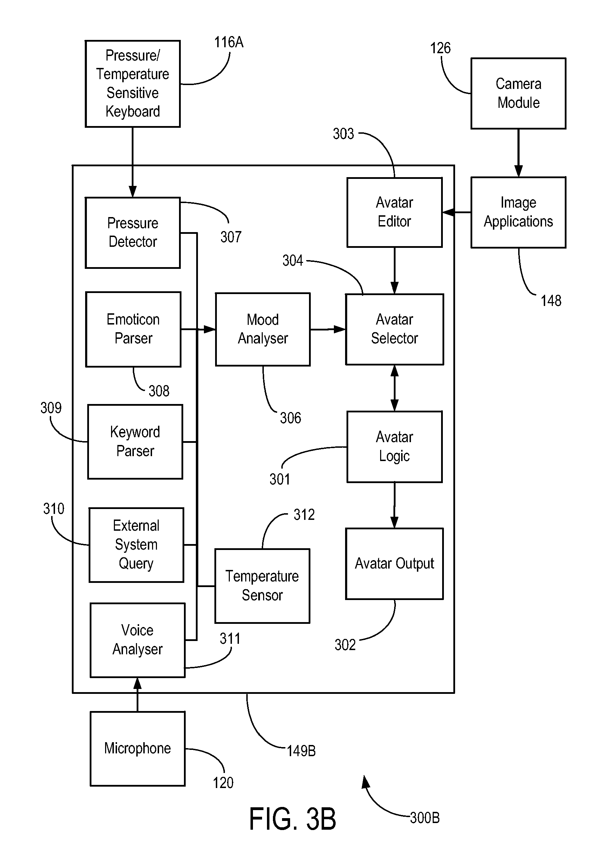

Now referring to FIG. 3B, when sending email messages on the communication device 100, a user may use "emoticons" within the body of an email message to communicate the context in which a statement is being made. An emoticon may comprise a string of characters, such as for example a colon followed by a right bracket ":)" to indicate a happy face. Alternatively, the emoticon may be a graphic icon, such as the following special character happy face icon: 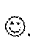 . The happy face emoticon, whether a string of characters or a graphic icon, may indicate the level of joy or happiness a sender is feeling or wishes to express. An emoticon may also be used to express other moods or emotions such as anger, fear, sadness, disgust, and surprise, etc. The various types of moods or emotions that may be displayed and the measurement of these moods may be based on studies done in the field, an illustrative example of which are the studies done on universal facial expressions by psychologist Paul Ekman.

The user may type the appropriate string of characters to indicate the mood, or may select a suitable graphic icon from a set of emoticons that may be provided, for example, in a drop-down or pop-up menu. Upon selection, the selected emoticon may be placed at the desired location (e.g. current location of the cursor) within a body of text to provide context.

As described above, avatars may be very useful in quickly identifying an email user. However, in addition, the inventors have recognized that it is also possible to communicate the mood of an email user or the context of an email message by using dynamic mood/context avatars. Thus, shown in FIG. 3B is a schematic block diagram of an illustrative system 300B for selecting and displaying a mood/context avatar for an email user in accordance with an embodiment. For the sake of brevity, the term "mood avatar" will be used hereinafter to refer to avatars that may express mood or context.

As shown, system 300B includes a mood avatar module 149B that may be integrated within the avatar module 149 of FIG. 3A. The mood avatar module 149B may include an avatar editor 303 that may be integrated with the image application module 148 and camera module 126. With the camera module 126, photos of the user displaying different moods or emotions (e.g. joy, anger, fear, sadness, disgust, and surprise) may be taken, appropriately edited to a suitable image size using an avatar editor 303, and saved on communication device 100 to use as the mood avatars. As well, instead of taking photos using the camera module 126, pictures could also be downloaded from a computer, or from online photo accounts such as Flickr™, Picasso™, Facebook™, etc.

Alternatively, the avatar editor 303 may be configured to allow a user to generate customized mood avatars using a custom avatar editor to express a user's various possible moods. An illustrative example will be provided further below.

Still referring to FIG. 3B, mood avatar module 149B may also include an avatar selector 304, which may receive inputs from the avatar editor 303 and from a mood analyser 306. The mood analyser 306 may in turn receive inputs from a number of mood sensors or mood evaluators, such as a pressure detector 307 connected to a pressure sensitive keyboard 116A, an emoticon parser 308, and a keyword parser 309, an external system query module 310, and a voice analyser 311 operatively connected to receive input from microphone 120.

In an embodiment, the pressure detector 307 may be configured to determine an average amount of force used by a user to enter text on the pressure sensitive keyboard 116A. The duration of the force applied on the keyboard 116A may also be used. Upon determining and storing an average force value, if the pressure detector 307 detects an above average amount of force being used by the user to enter text on the pressure sensitive keyboard 116A, the measured increased pressure value may be used as an input to the mood analyser 306. For example, an increased force may be interpreted to mean that the user was typing while in an angry mood, or in an urgent mood.

In another embodiment, the emoticon parser 308 may be used to parse strings of text or special characters representing emoticons within a message, to determine the number of emoticons and the type of emoticons used in the message. The number and type of emoticons may be another input to the mood analyser 306. For example, the presence of happy emoticons may be Interpreted by the mood analyser 306 as the user having a happy mood. If there are many happy emoticons within a message, this may be interpreted by the mood analyser 306 as the user being in an especially good mood.

In another embodiment, the keyword parser may be used to parse a message for various keyword or phrases that may indicate the mood of a user. For example, the keyword parser 309 may be used to identify pre-selected keywords or phrases such as "pleased", "happy", "delighted", "disappointed", "bored", "tired", "angry", "great", "terrible", etc. in close proximity to "I am", "I'm", "I was", "we are", "we're", "we were", etc. The presence of adverbs or adjectives such as "very," "extremely," etc., may also be used to interpret the degree or severity of a user's mood. These keywords and phrases, and their frequency within a message, may be interpreted by the mood analyzer 306 and processed as an output to the avatar selector 304 to guide the selection of a suitable mood avatar to indicate the overall mood of a user.

In another embodiment, an external system query module 310 may be configured to query and retrieve user mood information from an external source. For example, the external system query module 310 may query the online profile of a personal webpage (e.g. Facebook™. MSN™, Yahoo Messenger™, ICQ™, etc,) or from online gaming network profiles (e.g. Nintendo Wii™ Mii™ profiles or equivalent systems), to query whether a user has indicated how the user is feeling that day. For example, in Facebook™, the user may have written "It's Friday, TGIF!", or "This is a great day, sun is shining". This could also be interpreted by the keyword parser 309 described above to try to interpret the user's mood. Alternatively, rather than querying an external system, if the external system permits, the user's mood may be pushed to the mood avatar module 149B automatically, so that the mood of the user is provided as an input to mood analyser 306 as previously described.

In another embodiment, mood avatar module 149B may include a voice analyser 311 that may be operatively connected to receive input from microphone 120. Voice analyser 311 may be configured to detect and store a normal speech volume for a user, and if the voice analyser 311 detects an increase in speech volume, this may be interpreted as the user being in an angry or excited mood. The voice analyser may also be configured to detect laughter, crying, etc. in order to determine the mood of the user.

In another embodiment, mood avatar module 149B may include a temperature sensor 312 to detect the level of heat from a user's hand. The heat sensor 312 may provide yet another input into mood analyzer 306 which may be interpreted on its own or in conjunction with one of the other inputs to allow the mood analyser to provide an estimation of the user's mood.

In an embodiment, the avatar selector 304 may be configured to receive an input from the mood analyser 306, and to automatically select a mood avatar based on the input from the mood analyser 306. The avatar module 149B may also include, or be operatively connected to, avatar logic 301 and avatar output 302 previously described with reference to FIG. 3A to guide the selection and output of a mood avatar.

In an embodiment, avatar logic 301 may also be configured to provide a user with an opportunity to confirm the automatic mood avatar selection by the avatar selector module 304. The user may also be given an option to override the selection of the avatar selection module 304 so that the user can select any mood avatar of the user's choice.

In another embodiment, the avatar selector may be configured such that the input from the mood analyser 306 may be used not to automatically select an avatar, but to guide the selection by narrowing the types of mood avatars presented for selection by the user. For example, if the mood analyser 306 has sensed that the user appears to be in a generally good mood, the avatar selector 304 may display only the mood avatars displaying varying degrees of happiness. In this case, the selection of the mood avatar is left to the user, and the mood avatar may more accurately reflect the mood that the user wishes to communicate. Again, if the user does not like the narrowed selection of mood avatars presented by avatar selector 304, the user may override the suggestions and return to the full set of available mood avatars to select an appropriate mood.

In yet another embodiment, the user may be provided with a suitable user interface to turn on or off any one or more of the mood sensors or mood evaluators. Instead the user may simply provide a user selection of the mood that the user wishes to convey from a full selection of available mood avatars, and override any mood or emotion that the user does not wish to communicate.

Once a suitable mood avatar is selected, either automatically or by the user, avatar output 302 may be configured to output the avatar for communication to the recipient at another communication device. In an embodiment, avatar output 302 may be configured to communicate the mood avatar only when the message is sent to specific recipients, and suppressed when sent to yet other recipients. As will be appreciated, this will allow the user to control the use of mood avatars and to communicate them only to recipients that the sender is comfortable with.

In another embodiment, if a user has previously sent another user a set of mood avatars, and that set of mood avatars is already stored in storage on the recipient's communication device (not shown), then instead of sending the mood avatar graphic, a suitable identifier of the mood avatar may be sent so that the appropriate mood avatar may be retrieved from storage by a compatible avatar module in the recipient's communication device.

Some illustrative examples will now be provided to show how the email user avatars and mood avatars as described above may be displayed in a message list user interface. As shown by illustration in FIG. 4A, a conventional message list 400A may include a number of messages, 401 to 403, with a column for indicating the message sender 411 to 413, in this case "Robert", "Brenda" and "Fred".

Now referring to FIG. 4B, instead of the conventional message list as shown in 400A, the modified message list 400B of FIG. 4B now shows mood avatar 421 to 423 together with the senders' names. Each of these mood avatars indicate a mood, as selected by the sender, or as automatically selected by the avatar selector 304 of FIG. 3. Each of the senders, Robert, Brenda, and Fred, may have selected options on their communication devices to display the mood avatars to the recipient. Correspondingly, the recipient in this example may have chosen a user interface option to display both the mood avatars and the email user addresses or names. In this case, the mood avatar may mainly serve the function of communicating mood, rather than also communicating the identity of the sender.

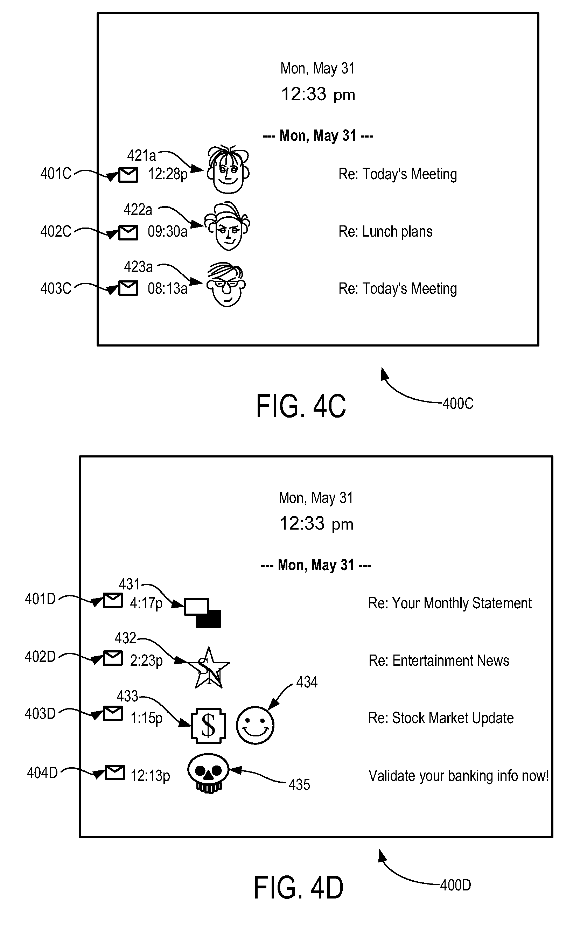

In an alternative embodiment, as shown in FIG. 4C, the mood avatars 42 1a, 422a, 423a may be presented alone, without the senders' names, to indicate both the identity and the mood of the sender. In this mode, avatars created from actual photos of users may be more easy to identify, and may better convey the mood of the sender. However, a suitable avatar editor 302 may be provided with a sufficient number of customizable graphic options such that a graphic mood avatar may be sufficiently unique to identity a particular user and to communicate various moods of that user.

Now referring to FIG. 4D, shown in a message list user interface 400D are illustrative examples of email user avatars that may represent an organization or a group, rather than an individual email user. For example, message 40 ID may be from an organization named "Shadow Box Sports", represented by the icon or avatar 431. instead of displaying a generic email address such as "billing@sbs.xyz", an avatar 431 that may be the organizations logo, or any other suitable graphic that may identify the organization, may be displayed instead. It will be appreciated that such an avatar 431 may be significantly easier to identify in a list of email messages than the generic email address. Similarly, a message 402D from "Star Entertainment News" may be identified using avatar 432.

Still referring to FIG. 4D, in an embodiment, supplementary graphics may be used in combination with a group avatar to convey additional information. While not directly analogous to the mood of an individual user, the use of symbols could be used to convey the nature of the message. For example, as shown in FIG. 4D, a message 403D from a fictitious '"Cross Finance Co." may be represented by a group avatar 433, and an additional graphic such as a happy face 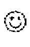 434, indicating that the message contains good news. Similarly, other types of graphics could be used to convey the nature of the message.

In another embodiment, special avatars may be used to represent a class of email users, rather than one email user (whether an individual or group). For example, as shown by way of illustration, FIG. 4D includes a message 404D from an email user that has been identified as being a potential spammer. A suitable avatar 435 may be used to identify the email and appropriately caution the user that the email may be potentially harmful. Upon seeing this avatar, the use may simply bypass or delete the email without opening it. It will be appreciated that other avatars may be used to identify various other classes of users rather than an individual user.

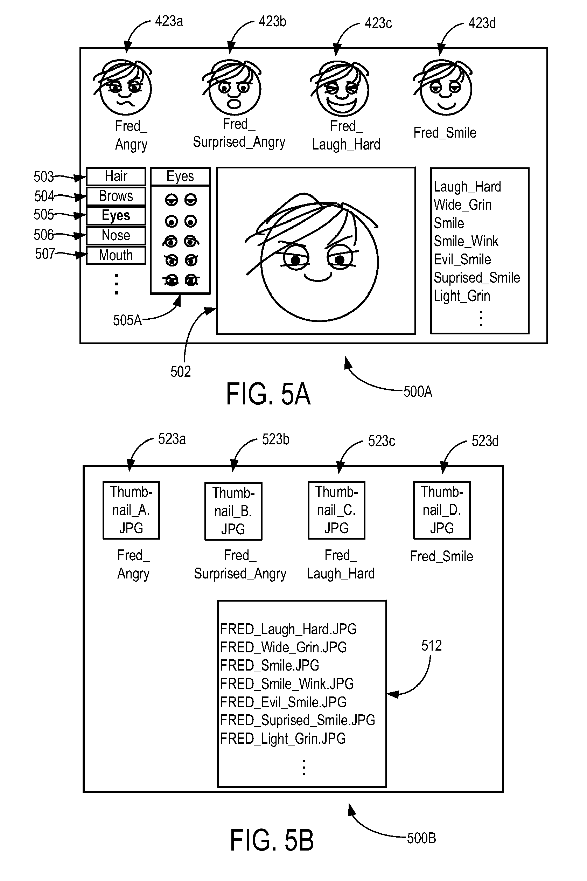

Now referring to FIG. 5A, shown is an illustrative example of a user interface 500A for editing mood avatars in accordance with an embodiment. For example, a user named "Fred" may decide to create a new mood avatar 502 by selecting various features of a face, including hair 503, eyebrows 504, eyes 505, nose 506, mouth 507, etc. A graphic menu, such as a set of eyes 505A for example, may be provided to allow the user to select the facial expression that the user wishes to convey. Alternatively, a free form input may be provided to allow the user to enter free form lines. The resulting mood avatars 423a, 423b, 423c, 423d may be appropriately labelled using predefined label names to permit automatic selection, or narrowing of selection based in input from the mood analyser 306. Alternatively, the user may be provided with a set of avatars that have already been prepared, such that user selection of a personal avatar is simply based on the avatar selected. However, in this case it will be appreciated that this may result in a possibility that more than one user may be using the same set of avatars.

Now referring to FIG. 5B, in order to ensure that each set of mood avatars is unique to a user, shown is illustrative user interface 500B for an avatar editor that may adapt the user's actual images captured by a camera (e.g. camera module 126). In this case, rather than creating graphic avatars as shown in FIG. 5A, the user may by prompted to take an image with a facial expression for each of the moods the user wishes to capture. In order to isolate the user's face, the user may be instructed to take the photo with a flash against a blue screen background, for example. This may allow the avatar editor 302 to better isolate just the user's head and facial expression. Once the set of images have been captured, they may be processed by the avatar editor 302 as necessary to an appropriately compressed size suitable for use as a mood avatar 523a, 523b, 523c, 523d.

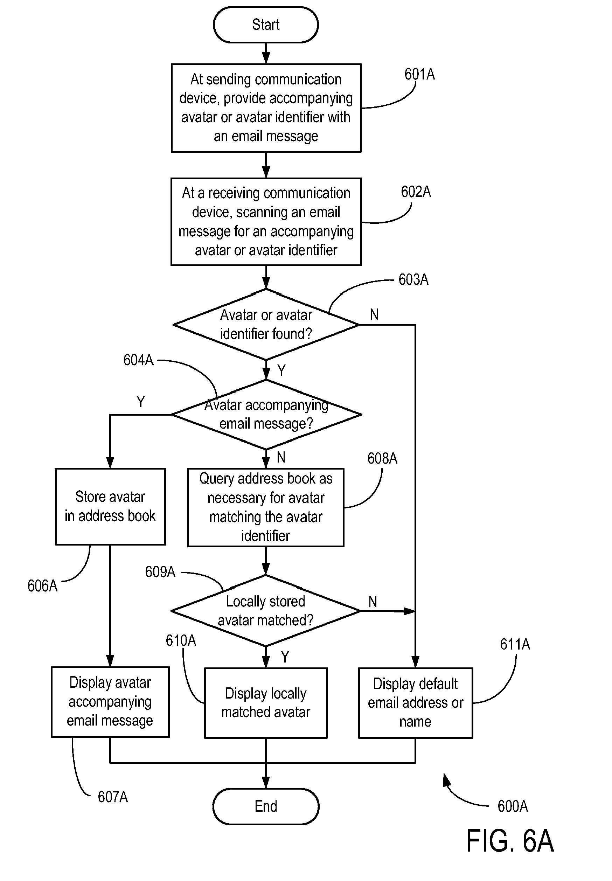

Now referring to FIG. 6A, shown is an illustrative method 600A in accordance with an embodiment. As shown, method 600A begins, and at block 601 A provides an accompanying avatar or avatar identifier with an email message. Next, at block 602A, method 600A scans an email message for the accompanying avatar, or avatar identifier. For example, the avatar graphic or identifier may be enclosed as an attachment in a suitable file format and naming convention recognizable by the avatar modules 149 or 149B described earlier.

Method 600A then proceeds to decision block 603A, where method 600A may determine whether or not an avatar or avatar identifier is found. If no, method 600A proceeds directly to block 611A, where method 600A may displays the default email address or name as shown by example in FIG. 4A. If yes, method 600A may proceed to decision block 604A.

At decision block 604A, method 600A may determine if an avatar graphic is accompanying the email message, for example as an email attachment in a suitable graphic file format. If yes, method 600A may proceed to block 606A, where the avatar graphic may be optionally stored in the local address book. Method 600A may then proceed to block 607A, where method 600A may display the avatar accompanying the email message in a message list user interface (as shown by example in FIG. 4D).

If at decision block 604A the answer is no, method 600A may proceed to block 608A, where method 600A may query a local address to look for any previously stored avatar graphics that may match the avatar identifier enclosed with the email message. Method 600A then proceeds to decision block 609A, where if a locally matched avatar is found, method 600A may proceed to block 610A to display the locally matched avatar. If no, method 600A may proceed to block 611A, where the default email address or name is displayed. Method 600A then ends.

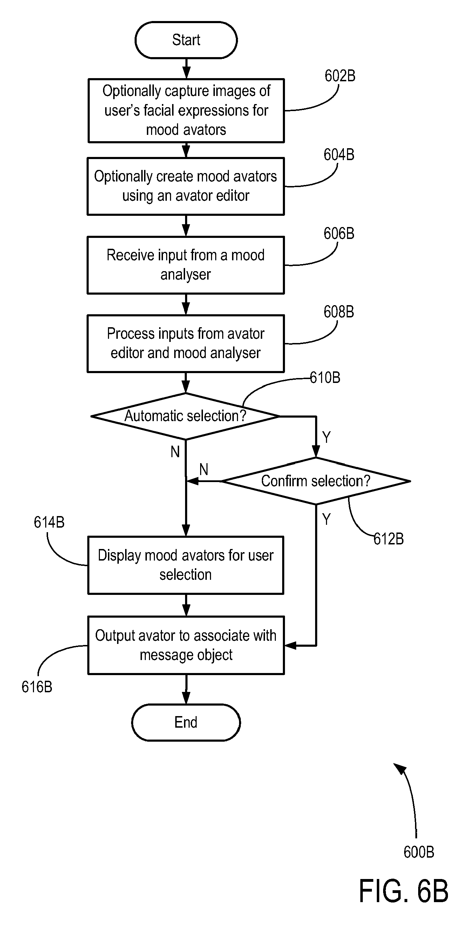

Now referring to FIG. 6B, shown is an illustrative method 600B in accordance with another embodiment. As shown, method 600B begins, and at block 602B optionally captures images of an individual user's facial expressions for mood avatars. Alternatively, method 600B may proceed to block 604B to optionally create mood avatars using an avatar editor (e.g. avatar editor 302 as illustrated in FIG. 5A).

Method 600B may then proceed to block 606B, where an avatar selector module (e.g. avatar selector 304) may be adapted to receive at least one input value from a mood analyser (e.g. mood analyser 306). As explained earlier, the mood analyser 306 may in turn receive input values from various mood sensors, such as a pressure detector 307 connected to a pressure sensitive keyboard 116A, an emoticon parser 308 to parse the number and type of emoticons used in a body of text, and a keyword parser 309 to parse keyword in a body of text that may be indicative of the message.

Method 600B may then proceed to block 608B, where input from the mood analyser may be used to select a corresponding mood avatar, or to a narrow the range of mood avatars that may be made available for user selection.

Method 600B may then proceed to decision block 610B, where if the mood avatar selection is automatic, method 600B may proceed to decision block 612B where the user may be prompted for confirmation of the selection. If the mood avatar selection is not automatic, method 600B may proceed to block 614B.

Upon confirmation at decision block 612B, method 600B may proceed to block 616B. However, if the selection is not confirmed, method 600B may proceed to block 614B. At block 614B, mood avatars may be displayed for selection by the user. As noted, the input from the mood analyser 306 may be used to narrow the number of mood avatars made available to the user for selection. For example, based on input from the mood analyser, a range of mood avatars indicating varying degrees of happiness may be offered for selection by the user. If the user does not wish to select any of the displayed avatars, the user may be provided with the option to retrieve a full set of mood avatars to select a more appropriate mood avatar.

Method 600B may then proceed to block 616B, where method 600B may adapt the avatar output module 314 to associate the selected mood avatar with an object, such as a message object for example. The associated mood avatar may then be stored with the message object, and selectively forwarded to other users who may view the mood avatar as illustrated by way of example in FIG. 4B and FIG. 4C described above. Method 600B then ends.

Thus, in an aspect, there is provided a method of graphically representing an email user, comprising: at a sending communication device, sending an accompanying avatar or avatar identifier with an email message; at a receiving communication device, determining whether an email message received from the sending communication device includes an accompanying avatar or avatar identifier, and if an accompanying avatar is found, displaying the avatar with the email message in a message list user interface; if an accompanying avatar identifier is found, searching for an avatar associated with the avatar identifier and locally stored at the receiving communication device, and displaying the locally stored avatar if found.

in an embodiment, the email user is an individual, and the method further comprises sending and receiving a mood avatar or mood avatar identifier indicative of the mood of the user.

In another embodiment, the method further comprises selecting the mood avatar at the sending communication device, the selection of the mood avatar comprising:
receiving at least one input value from a mood analyser indicative of a user's mood; processing the at least one input value received from the mood analyzer to calculate a user mood value; and providing a selection of at least one mood avatar with a mood value within a predefined range of the calculated user mood value.

In another embodiment, the method further comprises automatically selecting the mood avatar with the closest corresponding mood value as the calculated user mood value.

In another embodiment, the method further comprises prompting user confirmation of the automatically selected mood avatar; and in the absence of confirmation, providing a plurality of mood avatars within a predefined range of the calculated user mood value.

In another embodiment, the method further comprises providing a plurality of mood avatars within a predefined range of the calculated user mood value.

In another embodiment, the method further comprises receiving a user selection of one of the plurality of mood avatars.

In another embodiment, the method further comprises providing to the mood analyser input from one or more of a keyboard pressure detector, an emoticon parser, a keyword parser, an external system query module, a voice analyser, and a temperature sensor.

In another embodiment, the method further comprises: providing an avatar editor for editing mood avatars; and associating each mood avatar with a mood value.

In another embodiment, the method further comprises providing as inputs to the avatar editor photographic images of a user with various facial expressions.

In another embodiment, the method further comprises: if an accompanying avatar or avatar identifier is not found, and the email user is not recognized, then identifying the email user as a suspected spammer with a spam avatar.

In another aspect, there is provided a communication system for representing an email user, comprising: a sending communication device configured to send an accompanying avatar or avatar identifier with an email message; a receiving communication device configured to determine whether an email message received from the sending communication device includes an accompanying avatar or avatar identifier, and if an accompanying avatar is found, display the avatar with the email message in a message list user interface; if an accompanying avatar identifier is found, search for an avatar associated with the avatar identifier and locally stored at the receiving communication device, and display the locally stored avatar if found.

In an embodiment, the email user is an individual, and the communication system further comprises sending and receiving communication devices having means for sending and receiving, respectively, a mood avatar or mood avatar identifier indicative of the mood of the user.

In another embodiment, the communication system further comprises means for selecting the mood avatar at the sending communication device, the means for selecting the mood avatar comprising: means for receiving at least one input value from a mood analyser indicative of a user's mood; means for processing the at least one input value received from the mood analyzer to calculate a user mood value; and means for providing a selection of at least one mood avatar with a mood value within a predefined range of the calculated user mood value.

In another embodiment, the communication system further comprises means for automatically selecting the mood avatar with the closest corresponding mood value as the calculated user mood value.

In another embodiment, the communication system further comprises: means for prompting user confirmation of the automatically selected mood avatar; and in the absence of confirmation, for providing a plurality of mood avatars within a predefined range of the calculated user mood value.

In another embodiment, the communication system further comprises means for providing a plurality of mood avatars within a predefined range of the calculated user mood value.

In another embodiment, the communication system further comprises means for receiving a user selection of one of the plurality of mood avatars.

In another embodiment, the communication system further comprises means for providing to the mood analyser inputs from one or more of a keyboard pressure detector, an emoticon parser, a keyword parser, an external system query module, a voice analyser, and a temperature sensor.

In another embodiment, the communication system further comprises: means for providing an avatar editor for editing mood avatars; and means for associating each mood avatar with a mood value.

In another embodiment, the communication system further comprises means for providing as inputs to the avatar editor photographic images of a user with various facial expressions.

In another embodiment, the communication system further comprises means for determining if an accompanying avatar or avatar identifier is not found, and if the email user is not recognized, then displaying a spam avatar to identifying the email user as a suspected spammer.

In another aspect, there is provided a data processor readable medium storing data processor code that when loaded into communication devices adapt the devices to represent email users using avatars, the data processor readable medium comprising: code for sending from a sending communication device all accompanying avatar or avatar identifier with an email message; code for determining whether an email message received from the sending communication device includes an accompanying avatar or avatar identifier, and if an accompanying avatar is found, displaying the avatar with the email message in a message list user interlace; if an accompanying avatar identifier is found, searching for an avatar associated with the avatar identifier and locally stored at the receiving communication device, and displaying the locally stored avatar if found.

In an embodiment, the data processor readable medium further comprises code for sending and receiving a mood avatar or mood avatar identifier indicative of the mood of the user.

In another embodiment, the data processor readable medium further comprises code for selecting the mood avatar at the sending communication device, the code for selection of the mood avatar comprising: code for receiving at least one input value from a mood analyser indicative of a user's mood; code for processing the at least one input value received from the mood analyzer to calculate a user mood value; and code for providing a selection of at least one mood avatar with a mood value within a predefined range of the calculated user mood value.

In another embodiment, the data processor readable medium further comprises code for automatically selecting the mood avatar with the closest corresponding mood value as the calculated user mood value.

In another embodiment, the data processor readable medium further comprises:
code for prompting user confirmation of the automatically selected mood avatar; and in the absence of confirmation, providing a plurality of mood avatars within a predefined range of the calculated user mood value.

In another embodiment, the data processor readable medium further comprises code for providing a plurality of mood avatars within a predefined range of the calculated user mood value.

In another embodiment, the data processor readable medium further comprises code for receiving a user selection of one of the plurality of mood avatars.

In another embodiment, the data processor readable medium further comprises code for providing to the mood analyser inputs from one or more of a keyboard pressure detector, an emoticon parser, a keyword parser, an external system query module, a voice analyser, and a temperature sensor.

In another aspect, there is provided a communication device for sending an email message from an email user, comprising: means for selecting an avatar identifying the email user; and means for sending the avatar or an avatar identifier associated with the avatar with the email message to a receiving communication device.

In an embodiment, the email user is an individual, and the communication device further comprises a mood analyzer for calculating a user mood value.

In another embodiment, the communication device further comprises means for automatically selecting the mood avatar with the closest corresponding mood value as the calculated user mood value.

In another embodiment, the communication device further comprises: means for prompting user confirmation of the automatically selected mood avatar; and in the absence of confirmation, for providing a plurality of mood avatars within a predefined range of the calculated user mood value.

In another embodiment, the communication device further comprises means for providing a plurality of mood avatars within a predefined range of the calculated user mood value.

In another embodiment, the communication device further comprises means for receiving a user selection of one of the plurality of mood avatars.

In another embodiment, the communication device further comprises means for providing to the mood analyser inputs from one or more of a keyboard pressure detector, an emoticon parser, a keyword parser, an external system query module, a voice analyser, and a temperature sensor.

In another embodiment, the communication device further comprises: means for providing an avatar editor for editing mood avatars; and means for associating each mood avatar with a mood value.

In another embodiment, the communication device further comprises means for providing as inputs to the avatar editor photographic images of a user with various facial expressions.

In another embodiment, the communication device further comprises: means for determining whether an email message received from a sending communication device includes an accompanying avatar or avatar identifier, and if an accompanying avatar is found, displaying the avatar with the email message in a message list user interface; if an accompanying avatar identifier is found, search for an avatar associated with the avatar identifier and locally stored at the receiving communication device, and displaying the locally stored avatar if found.

In an embodiment, the user is an individual, and the communication device further comprises means for receiving a mood avatar or mood avatar identifier indicative of the mood of the user.

In another embodiment, the communication device further comprises means for determining if an accompanying avatar or avatar identifier is not found, and if the email user is not recognized, then displaying a spam avatar to identifying the email user as a suspected spammer.

In another aspect, there is provided a communication device for sending an email message from an email user, comprising: means for selecting an avatar identifying the email user; and means for sending the avatar or an avatar identifier associated with the avatar with the email message to a receiving communication device.

In an embodiment, the email user is an individual, and the communication device further comprises a mood analyzer for calculating a user mood value.

In another embodiment, the communication device further comprises means for automatically selecting the mood avatar with the closest corresponding mood value as the calculated user mood value.

In another embodiment, the communication device further comprises: means for prompting user confirmation of the automatically selected mood avatar; and n the absence of confirmation, for providing a plurality of mood avatars within a predefined range of the calculated user mood value.

In another embodiment, the communication device further comprises means for providing a plurality of mood avatars within a predefined range of the calculated user mood value.

In another embodiment, the communication device further comprises means for receiving a user selection of one of the plurality of mood avatars.

In another embodiment, the communication device further comprises means for providing to the mood analyser inputs from one or more of a keyboard pressure detector, an emoticon parser, a keywords parser, an external system query module, a voice analyser, and a temperature sensor.

In another embodiment, the communication device further comprises: means for providing an avatar editor for editing mood avatars; and means for associating each mood avatar with a mood value.

In another embodiment, the communication device further comprises means for providing as inputs to the avatar editor photographic images of a user with various facial expressions.

In another aspect, there is provided a communication device for receiving an email message from an email user, comprising: means for determining whether an email message received from a sending communication device includes an accompanying avatar or avatar identifier, and if an accompanying avatar is found, displaying the avatar with the email message in a message list user interface; if an accompanying avatar identifier is found, search for an avatar associated with the avatar identifier and locally stored at the receiving communication device, and displaying the locally stored avatar if found.

In an embodiment, the email user is an individual, and the communication device further comprises means for receiving a mood avatar or mood avatar identifier indicative of the mood of the user.

In another embodiment, the communication device further comprises means for determining if an accompanying avatar or avatar identifier is not found, and if the email user is not recognized, then displaying a spam avatar to identifying the email user as a suspected spammer.

While illustrative embodiments have been described above, it will be appreciated that various changes and modifications may be made. More generally, the scope of the invention is defined by the following claims.

A portion of the disclosure of this patent document contains material which is subject to copyright protection. The copyright owner has no objection to the facsimile reproduction of the patent document or the patent disclosure, as it appears in the Patent and Trademark Office patent file or records, but otherwise reserves all copyright rights whatsoever.

## Claims

1. A method of graphically representing an email user, comprising:
at a sending communication device, sending an accompanying avatar or avatar identifier with an email message;
at a receiving communication device, determining whether an email message received from the sending communication device has an accompanying avatar or avatar identifier, and
if an accompanying avatar is found, displaying the avatar with the email message in a message list user interface;
if an accompanying avatar identifier is found, searching for an avatar associated with the avatar identifier and locally stored at the receiving communication device, and displaying the locally stored avatar if found.

2. The method of claim 1, wherein the email user is an individual, and the method further comprises sending and receiving a mood avatar or mood avatar identifier indicative of a mood of the user.

3. The method of claim 2, further comprising selecting the mood avatar at the sending communication device, the selection of the mood avatar comprising:
receiving at least one input value from a mood analyser indicative of a user's mood;
processing the at least one input value received from the mood analyzer to calculate a user mood value; and
providing a selection of at least one mood avatar with a mood value within a predefined range of the calculated user mood value.

4. The method of claim 3, further comprising automatically selecting the mood avatar with the closest corresponding mood value as the calculated user mood value.

5. The method of claim 4, further comprising:
prompting user confirmation of the automatically selected mood avatar; and
in the absence of confirmation, providing a plurality of mood avatars within a predefined range of the calculated user mood value.

6. The method of claim 3, further comprising providing a plurality of mood avatars within a predefined range of the calculated user mood value.

7. The method of claim 6, further comprising receiving a user selection of one of the plurality of mood avatars.

8. The method of any one of claims 3 to 7, further comprising providing to the mood analyser input from one or more of a keyboard pressure detector, an emoticon parser, a keyword parser, an external system query module, a voice analyser, and a temperature sensor.

9. The method of any one of claims 3 to 8, further comprising:
providing an avatar editor for editing mood avatars; and
associating each mood avatar with a mood value.

10. The method of claim 9, further comprising:
providing as inputs to the avatar editor photographic images of a user with various facial expressions.

11. The method of claim 1, further comprising:
if an accompanying avatar or avatar identifier is not found, and the email user is not recognized, then identifying the email user as a suspected spammer with a spam avatar.

12. A communication system for representing an email user, comprising:
a sending communication device configured to send an accompanying avatar or avatar identifier with an email message;
a receiving communication device configured to determine whether an email message received from the sending communication device has an accompanying avatar or avatar identifier, and
if an accompanying avatar is found, to display the avatar with the email message in a message list user interface;
if an accompanying avatar identifier is found, to search for an avatar associated with the avatar identifier and locally stored at the receiving communication device, and to display the locally stored avatar if found.

13. The communication system of claim 12, wherein the email user is an individual, and the communication system further comprises sending and receiving communication devices having means for sending and receiving, respectively, a mood avatar or mood avatar identifier indicative off mood of the user.

14. The communication system of claim 13, further comprising means for selecting the mood avatar at the sending communication device, the means for selecting the mood avatar comprising:
means for receiving at least one input value from a mood analyser indicative of a user's mood;
means for processing the at least one input value received from the mood analyzer to calculate a user mood value; and
means for providing a selection of at least one mood avatar with a mood value within a predefined range of the calculated user mood value.

15. The communication system of claim 14, further comprising means for automatically selecting the mood avatar with the closest corresponding mood value as the calculated user mood value.

16. The communication system of claim 15, further comprising;
means for prompting user confirmation of the automatically selected mood avatar; and
in the absence of confirmation, for providing a plurality of mood avatars within a predefined range of the calculated user mood value.

17. The communication system of claim 14, further comprising means for providing a plurality of mood avatars within a predefined range of the calculated user mood value.

18. The communication system of claim 17, further comprising means for receiving a user selection of one of the plurality of mood avatars.

19. The communication system of any one of claims 14 to 18, further comprising means for providing to the mood analyser inputs from one or more of a keyboard pressure detector, an emoticon parser, keywords parser, an external system query module, a voice analyser, and a temperature sensor.

20. The communication system of any one of claims 14 to 19, further comprising:
means for providing an avatar editor for editing mood avatars; and
means for associating each mood avatar with a mood value.

21. The communication system of claim 20, further comprising:
means for providing as inputs to the avatar editor photographic images of a user with various facial expressions.

22. The communication system of claim further comprising:
means for determining if an accompanying avatar or avatar identifier is not found, and if the email user is not recognized, then displaying a spam avatar to identify the email user as a suspected spammer.

23. A data processor readable medium storing data processor code that when loaded into communication devices adapt the devices to represent email users using avatars, the data processor readable medium comprising:
code for sending from a sending communication device an accompanying avatar or avatar identifier with an email message;
code for determining whether an email message received from the sending communication device has an accompanying avatar or avatar identifier, and
if an accompanying avatar is found, displaying the avatar with the email message in a message list user interface;
if an accompanying avatar identifier is found, searching for an avatar associated with the avatar identifier and locally stored at the receiving communication device, and displaying the locally stored avatar if found.

24. The data processor readable medium of claim 23, further comprising code for sending and receiving a mood avatar or mood avatar identifier indicative of a mood of the user.

25. The data processor readable medium of claim 24, further comprising code for selecting the mood avatar at the sending communication device, the code for selection of the mood avatar comprising:
code for receiving at least one input value from a mood analyser indicative of a user's mood;
code for processing the at least one input value received from the mood analyzer to calculate a user mood value; and
code for providing a selection of at least one mood avatar with a mood value within a predefined range of the calculated user mood value.

26. The data processor readable medium of claim 25, further comprising code for automatically selecting the mood avatar with the closest corresponding mood value as the calculated user mood value.

27. The data processor readable medium of claim 26, further comprising:
code for prompting user confirmation of the automatically selected mood avatar; and
in the absence of confirmation, providing a plurality of mood avatars within a predefined range of the calculated user mood value.

28. The data processor readable medium of claim 24, further comprising code for providing a plurality of mood avatars within a predefined range of the calculated user mood value.

29. The data processor readable medium of claim 28, further comprising code for receiving a user selection of one of the plurality of mood avatars.

30. The data processor readable medium of any one of claims 25 to 29, further comprising code for providing to the mood analyser inputs from one or more of a keyboard pressure detector, an emoticon parser, a keyword parser, an external system query module, a voice analyser, and a temperature sensor.

31. A communication device for sending an email message from an email user, comprising:
means for selecting an avatar identifying the email user; and
means for sending the avatar or an avatar identifier associated with the avatar with the email message to a receiving communication device.

32. The communication device of claim 31, wherein the email user is an individual, and the communication device further comprises a mood analyzer for calculating a user mood value.

33. The communication device of claim 32, further comprising means for automatically selecting the mood avatar with the closest corresponding mood value as the calculated user mood value.

34. The communication device of claim 33, further comprising:
means for prompting user confirmation of the automatically selected mood avatar; and
in the absence of confirmation, for providing a plurality of mood avatars within a predefined range of the calculated user mood value.

35. The communication device of claim 32, further comprising means for providing a plurality of mood avatars within a predefined range of the calculated user mood value.

36. The communication device of claim 35, further comprising means for receiving a user selection of one of the plurality of mood avatars.

37. The communication device of any one of claims 32 to 36, further comprising means for providing to the mood analyser inputs from one or more of a keyboard pressure detector, an emoticon parser, a keyword parser, an external system query module, a voice analyser, and a temperature sensor.

38. The communication device of any one of claims 32 to 37, further comprising:
means for providing an avatar editor for editing mood avatars; and
means for associating each mood avatar with a mood value.

39. The communication device of claim 38, further comprising:
means for providing as inputs to the avatar editor photographic images of a user with various facial expressions.

40. A communication device for receiving an email message from an email user, comprising:
means for determining whether an email message received from a sending communication device has an accompanying avatar or avatar identifier, and
if an accompanying avatar is found, displaying the avatar with the email message in a message list user interface;
if an accompanying avatar identifier is found, searching for an avatar associated with the avatar identifier and locally stored at the receiving communication device, and displaying the locally stored avatar if found.

41. The communication device of claim 40, wherein the email user is an individual, and the communication device further comprises means for receiving a mood avatar or mood avatar identifier indicative of a mood of the user.

42. The communication device of claim 40, further comprising:
means for determining if an accompanying avatar or avatar identifier is not found, and if the email user is not recognized, then displaying a spam avatar to identifying the email user as a suspected spammer.

43. A method at a communication device of sending an email message from an email user, comprising:
selecting an avatar identifying the email user; and
sending the avatar or an avatar identifier associated with the avatar with the email message to a receiving communication device.

44. A data processor readable medium storing data processor code that when loaded into a communication device adapt the device perform the method of claim 43.

45. A method at a communication device of receiving an email message from an email user, comprising:
determining whether an email message received from a sending communication device has an accompanying avatar or avatar identifier, and
if an accompanying avatar is found, displaying the avatar with the email message in a message list user interface;
if an accompanying avatar identifier is found, searching for an avatar associated with the avatar identifier and locally stored at the receiving communication device, and to displaying the locally stored avatar if found.

46. A data processor readable medium storing data processor code that when loaded into a communication device adapt the device perform the method of claim 45.

## Amended claims

### Amended claims in accordance with Rule 137(2) EPC.

**1.** A method of graphically representing mood of an email user, comprising:
at a sending communication device (100),
receiving (606B) at least one input value from a mood analyser (306) indicative of the user's mood and processing (608B) the at least one input value received from the mood analyzer (306) to calculate a user mood value;
presenting for selection (614B) at least one mood avatar with a mood value within a predefined range of the calculated user mood value;
sending an accompanying mood avatar or mood avatar identifier with an email message;
at a receiving communication device, determining (603A) whether an email message received from the sending communication device has an accompanying mood avatar or mood avatar identifier, and
if an accompanying mood avatar is found, displaying (607A) the mood avatar with the email message in a message list user interface;
if an accompanying mood avatar identifier is found, searching (609A) for a mood avatar associated with the mood avatar identifier and locally stored at the receiving communication device, and displaying (610A) the locally stored mood avatar if found.

**2.** The method of claim 1, further comprising automatically selecting (610B) the mood avatar with the closest corresponding mood value as the calculated user mood value.

**3.** The method of claim 2, further comprising:
prompting user confirmation of the automatically selected mood avatar; and
in the absence of confirmation, providing (614B) a plurality of mood avatars within a predefined range of the calculated user mood value.

**4.** The method of claim 1, further comprising providing (614B) a plurality of mood avatars within a predefined range of the calculated user mood value.

**5.** The method of claim 4, further comprising receiving a user selection of one of the plurality of mood avatars.

**6.** The method of any one of claims 1 to 5, further comprising providing to the mood analyser (306) input from one or more of a keyboard pressure detector (307), an emoticon parser (308), a keyword parser (309), an external system query module (310), a voice analyser (311), and a temperature sensor (312).

**7.** The method of any one of claims 1 to 6, further comprising:
providing an avatar editor (303) for editing mood avatars; and
associating each mood avatar with a mood value.

**8.** The method of claim 7, further comprising:
providing as inputs to the avatar editor (303) photographic images of a user with various facial expressions.

**9.** The method of claim 1, further comprising:
if an accompanying mood avatar or mood avatar identifier is not found, and the email user is not recognized, then identifying the email user as a suspected spammer with a spam avatar.

**10.** A communication system for representing the mood of an email user, comprising:
a sending communication device (100) configured to,
receive at least one input value from a mood analyser (306) indicative of the user's mood and process the at least one input value received from the mood analyser (306) to calculate a user mood value;
present for selection at least one mood avatar with a mood value within a predefined range of the calculated user mood value;
send an accompanying mood avatar or mood avatar identifier with an email message;
a receiving communication device configured to determine whether an email message received from the sending communication device has an accompanying mood avatar or mood avatar identifier, and
if an accompanying mood avatar is found, to display the mood avatar with the email message in a message list user interface;
if an accompanying mood avatar identifier is found, to search for a mood avatar associated with the mood avatar identifier and locally stored at the receiving communication device, and to display the locally stored mood avatar if found.

**11.** The communication system of claim 10, further comprising means (304) for automatically selecting the mood avatar with the closest corresponding mood value as the calculated user mood value.

**12.** The communication system of claim 11, further comprising:
means (301) for prompting user confirmation of the automatically selected mood avatar; and
in the absence of confirmation, for providing (614B) a plurality of mood avatars within a predefined range of the calculated user mood value.

**13.** The communication system of claim 10, further comprising means (304) for providing (614B) a plurality of mood avatars within a predefined range of the calculated user mood value.

**14.** The communication system of claim 13, further comprising means for receiving a user selection of one of the plurality of mood avatars.

**15.** The communication system of any one of claims 10 to 14, further comprising means for providing to the mood analyser inputs from one or more of a keyboard pressure detector (307), an emoticon parser (308), a keyword parser (309), an external system query module (310), a voice analyser (311), and a temperature sensor (312).

**16.** The communication system of any one of claims 10 to 15, further comprising:
means for providing an avatar editor (303) for editing mood avatars; and
means (301) for associating each mood avatar with a mood value.

**17.** The communication system of claim 16, further comprising:
means (126, 148) for providing as inputs to the avatar editor (303) photographic images of a user with various facial expressions.

**18.** The communication system of claim 10, further comprising:
means for determining if an accompanying mood avatar or mood avatar identifier is not found, and if the email user is not recognized, then displaying a spam avatar to identify the email user as a suspected spammer.

**19.** A data processor readable medium storing data processor code that when loaded into communication devices adapt the devices to represent moods of email users using avatars, the data processor readable medium comprising:
code for receiving at a sending communication device (100) at least one input value from a mood analyser (306) indicative of a user's mood and processing the at least one input value received from the mood analyser (306) to calculate a user mood value;
code for presenting for selection at least one mood avatar with a mood value within a predefined range of the calculated user mood value;
code for sending from the sending communication device (100) an accompanying mood avatar or mood avatar identifier with an email message;
code for determining at a receiving communication device whether an email message received from the sending communication device (100) has an accompanying mood avatar or mood avatar identifier, and
if an accompanying mood avatar is found, displaying the mood avatar with the email message in a message list user interface;
if an accompanying mood avatar identifier is found, searching for a mood avatar associated with the mood avatar identifier and locally stored at the receiving communication device, and displaying the locally stored mood avatar if found.

**20.** The data processor readable medium of claim 19, further comprising code for automatically selecting (610B) the mood avatar with the closest corresponding mood value as the calculated user mood value.

**21.** The data processor readable medium of claim 20, further comprising:
code for prompting user confirmation of the automatically selected mood avatar; and
in the absence of confirmation, providing (614B) a plurality of mood avatars within a predefined range of the calculated user mood value.

**22.** The data processor readable medium of claim 19, further comprising code for providing (614B) a plurality of mood avatars within a predefined range of the calculated user mood value.

**23.** The data processor readable medium of claim 22, further comprising code for receiving a user selection of one of the plurality of mood avatars.

**24.** The data processor readable medium of any one of claims 19 to 23, further comprising code for providing to the mood analyser (306) inputs from one or more of a keyboard pressure detector (307), an emoticon parser (308), a keyword parser (309), an external system query module (310), a voice analyser (311), and a temperature sensor (312).
